Europäisches Patentamt

European Patent Office

Office européen des brevets

(19)

(11) Veröffentlichungsnummer: **0 088 140**
**B1**

(12) # EUROPÄISCHE PATENTSCHRIFT

(45) Veröffentlichungstag der Patentschrift:
08.06.88

(21) Anmeldenummer: 82101874.4

(22) Anmeldetag: 09.03.82

(51) Int. Cl.⁴: **A 01 B 17/00**

(54) **Pflug mit einem am Pflugrahmen angebrachten Ausleger.**

(43) Veröffentlichungstag der Anmeldung:
14.09.83 Patentblatt 83/37

(45) Bekanntmachung des Hinweises auf die Patenterteilung:
08.06.88 Patentblatt 88/23

(84) Benannte Vertragsstaaten:
AT BE CH DE FR GB IT LI NL

(56) Entgegenhaltungen:
DE-A-1 557 821
DE-A-2 022 215
DE-A-2 254 208
DE-A-2 718 980
DE-A-2 932 824
US-A-3 566 974
US-A-4 171 172

(73) Patentinhaber: Johann Gassner K.G., Post
Grosshelfendorf, D-8011 Göggenhofen (DE)

(72) Erfinder: Gassner, Benno, D-8011 Göggenhofen (DE)
Erfinder: Gassner jun., Johann, Haus Nr. 10,
D-8011 Göggenhofen (DE)

(74) Vertreter: Lamprecht, Helmut, Dipl.- Ing.,
Corneliusstrasse 42, D-8000 München 5 (DE)

## Beschreibung

Die Erfindung betrifft einen Pflug mit einem am Pflugrahmen angebrachten, in Arbeitsstellung seitlich quer zur Fahrtrichtung aus dem Arbeitsbereich des Pfluges herausragenden Ausleger für den Anschluß von Zusatzgeräten, wobei der Ausleger gegenüber einem mit dem Pflugrahmen verbindbaren Befestigungsabschnitt um eine dem Pflugrahmen benachbart angeordnete, etwa parallel zur Fahrtrichtung verlaufende Schwenkachse verschwenkbar ist und in einer Arbeitsstellung gegenüber dem Befestigungsabschnitt festlegbar ist.

Bei Pflügen dieser Art bildet der Ausleger mit dem Pflugrahmen während der Arbeit hinsichtlich der Beweglichkeit um die Schwenkachse eine starre Einheit. Damit soll eine möglichst gleichbleibende Arbeitswirkung des Zusatzgerätes erzielt werden.

Es sind auch Konstruktionen bekannt, bei welchen der Ausleger gegenüber dem Pflugrahmen in der Arbeitsstellung frei um die Schwenkachse beweglich ist. Eine solche Bauform ist beispielsweise aus der DE-A-1 557 821 bekannt. Dabei ist der Ausleger mit dem Pflugrahmen durch eine in Arbeitsstellung durchhängende Kette verbunden, die in Arbeitsstellung die freie Beweglichkeit des Auslegers um die Schwenkachse nicht behindert und deren Aufgabe darin besteht, den Ausleger beim Ausheben des Pfluges mit anzuheben.

Bei frei beweglichen Auslegern besteht die Gefahr, daß der Ausleger unter dem Einfluß von Stößen, z. B. beim Auftreffen auf ein Hindernis, zu große Schwenkbewegungen um die Schwenkachse ausführt, so daß das vom Ausleger getragene Gerät eine ungleichförmige oder zuweilen sogar unterbrochene Arbeit liefert.

Da nur selten eine völlig ebene Bodenoberfläche anzutreffen ist und der Bodenabstand des Zusatzgerätes bei einer starren Verbindung mit dem Pflugrahmen vom Pflugtiefgang abhängig ist, der sich auf die Bodenoberfläche im Bereich des Pfluges bezieht, kann sich die Arbeitswirkung des Zusatzgeräts auch bei einer starren Verbindung mit dem Pflugrahmen infolge des wechselnden Bodenabstandes verändern.

Es ist bekannt, die Zusatzgeräte am Ausleger um eine etwa in Fahrtrichtung verlaufende Achse pendelnd zu befestigen, wie dies auch aus der DE-A-1 557 821 ersichtlich ist. Damit kann sich das Zusatzgerät zwar unterschiedlichen Neigungen der Bodenoberfläche quer zur Arbeitsrichtung anpassen, eine Veränderung der absoluten Höhenlage des vom Ausleger getragenen Zusatzgeräte in Bezug auf den Pflugrahmen ist dadurch aber nicht möglich.

Aus der US-A-4 171 172 ist es bekannt, an einem Geräterahmen ein nachlaufendes Hilfswerkzeug über eine Stange zu befestigen, welche um eine etwa horizontale Achse verschwenkbar ist und deren Winkelausschlag nach oben durch eine Feder gedämpft wird, die bestrebt ist, das Hilfswerkzeug in Bodenkontakt zu drücken. Für seitlich quer zur Fahrtrichtung aus dem Arbeitsbereich des Pfluges herausragende Ausleger ist diese Konstruktion nicht geeignet, weil der Ausleger nicht auf die normale Breite des Pfluges zurückgeschwenkt werden kann, was nicht nur während des Transports, sondern auch bei Arbeiten im Grenzbereich oder entlang von Hindernissen zu Schwierigkeiten führt. Außerdem wird das Zusatzgerät nur in einer Richtung belastet und in seinem Schwenkwinkel um die Schwenkachse begrenzt, während in der Gegenrichtung keine Abstützung oder Begrenzung des Schwenkbereichs vorhanden ist. Je nach Bodenbeschaffenheit kann es in der Praxis ebenso erforderlich werden, ein zu tiefes Einsinken des Zusatzgeräts zu verhindern, wie ein zu starkes Steigen des Zusatzgeräts. Es sind auch Arbeitsbedingungen möglich, wo es erwünscht ist, die Höhenlage des Zusatzgeräts gegenüber dem Pflugrahmen zu fixieren.

Der Erfindung liegt die Aufgabe zugrunde, einen Pflug der eingangs genannten Art so auszugestalten, daß allen vorstehend geschilderten Anforderungen entsprochen werden kann, d.h. vom Ausleger getragene Zusatzgeräte sollen in einer vorgegebenen Arbeitsstellung gegenüber dem Pflugrahmen festlegbar sein, es soll aber auch die Möglichkeit bestehen, die Zusatzgeräte in einer der Arbeitsstellung entsprechenden mittleren Position so zu halten, daß ein begrenzter Winkelausschlag um die Schwenkachse nach beiden Seiten möglich ist, um auch bei Bodenunebenheiten einen möglichst gleichbleibenden Bodenabstand der Zusatzgeräte zu ermöglichen oder Hindernissen ausweichen zu können, ohne daß durch Stöße eine zu große Schwenkbewegung verursacht werden kann. Außerdem soll je nach Bodenbeschaffenheit eine Veränderung der Belastung der Zusatzgeräte möglich sein. Schließlich soll die Möglichkeit bestehen, den Pflug im Bereich von Hindernissen oder beim Transport hochklappen zu können.

Zur Lösung der gestellten Aufgabe ist der eingangs genannte Pflug derart ausgebildet, daß die Beweglichkeit des Auslegers um die Schwenkachse in Bezug auf eine mittlere, etwa horizontale Arbeitsposition durch zwei Anschläge begrenzbar ist, die zwischen einer den Ausleger in seiner mittleren Arbeitsposition gegenüber dem Befestigungsabschnitt festlegenden Position und einer seinen Ausschlag nach beiden Schwenkrichtungen auf einen geringen, zum Ausgleich von Bodenunebenheiten geeigneten Winkel begrenzenden Position verstellbar sind, und daß zumindest auf der oberen Seite des Auslegers der Anschlag entfernbar ist.

Damit kann sich das Zusatzgerät unabhängig von der Lage des Pfluges einstellen, ohne daß wegen der Anschläge eine zu weite Ausschwenkung z. B. unter dem Einfluß von Stößen beim Überwinden von Hindernissen möglich ist. Auf Wunsch kann der Ausleger aber auch in seiner mittleren Arbeitsposition festgelegt werden. Außerdem kann er nach Entfernen des Anschlags in eine Transportstellung überführt werden.

Nach einer vorteilhaften Ausgestaltung kann der Ausleger durch gegenläufig wirksame Dämpfungselemente in seine mittlere Arbeitsposition vorgespannt sein, wobei zweckmäßigerweise durch Strömungsmitteldruck wirksame Dämpfungselemente vorgesehen sein können.

Eine besonders vorteilhafte Ausführungsform besteht dabei darin, daß am Ausleger ein in dessen Längsrichtung wirkender, doppeltwirkender Hydraulikzylinder angeordnet ist, dessen Kolbenstange in Längsrichtung des Auslegers geführt und unter Bildung eines Kniegelenks mit parallel zur Schwenkachse verlaufender Gelenkachse mit einer am Befestigungsabschnitt um eine parallel zur Schwenkachse verlaufende Stützachse verschwenkbaren Schwinge verbunden ist, und daß die Schwenkachse und die Stützachse auf unterschiedlichen Seiten der Kolbenstangenachse liegen.

Bei dieser Ausführungsform kann der Hydraulikzylinder benutzt werden, um den Ausleger in seine Ruhestellung zu verschwenken. Um der Unfallgefahr bei einem Bruch der Hydraulikleitungen zu begegnen, sind vorzugsweise die Anschlüsse des Hydraulikzylinders mit einstellbaren Drosselventilen versehen, so daß sich nach einem Bruch einer Leitung der Zylinder nur langsam entleeren kann.

Eine besonders vorteilhafte Ausgestaltung besteht dabei noch darin, daß die beiden Anschlüsse des Hydraulikzylinders über die Drosselventile direkt miteinander verbindbar sind, so daß der Hydraulikzylinder die Funktion der Dämpfungsglieder übernehmen kann.

Bei gewissen Arbeiten kann es erwünscht sein, den Bodendruck des Zusatzgeräts zu erhöhen. Dies kann bei mechanischen Dämpfungsgliedern durch Erhöhung der Federspannung geschehen. Bei der Verwendung eines Hydraulikzylinders besteht eine zweckmäßige Weiterbildung darin, daß jedem Anschluß ein Druckspeicher zugeordnet ist.

Eine weitere zweckmäßige Ausgestaltung besteht darin, daß jeder Anschluß und der ihm zugeordnete Druckspeicher wahlweise mit einer über die Regeleinheit an einem Zugfahrzeug mit einer Druckquelle oder einer Rücklaufleitung verbindbaren Versorgungsleitung oder dem jeweils anderen Anschluß und dem ihm zugeordneten Druckspeicher verbindbar ist.

Vorzugsweise ist der Ausleger als Hohlprofil ausgebildet und nimmt in seinem Innenraum den Hydraulikzylinder und gegebenenfalls die Druckspeicher auf.

Anhand der nun folgenden Beschreibung der in der Zeichnung dargestellten Ausführungsbeispiele der Erfindung wird diese näher erläutert.

Es zeigt:

Fig. 1 eine schematische Draufsicht auf einen erfindungsgemäß mit einem Ausleger versehenen Pflug,

Fig. 2 einen Längsschnitt durch eine erste Ausführungsform des Auslegers mit mechanischer Dämpfung,

Fig. 3 einen Längsschnitt durch eine zweite Ausführungsform des Auslegers mit einem doppeltwirkenden Hydraulikzylinder in Arbeitsstellung,

Fig. 4 den Ausleger gemäß Fig. 3 in Ruhestellung, teilweise abgebrochen und

Fig. 5 eine schematische Darstellung des Hydrauliksystems der Ausführungsform nach den Fig. 3 und 4.

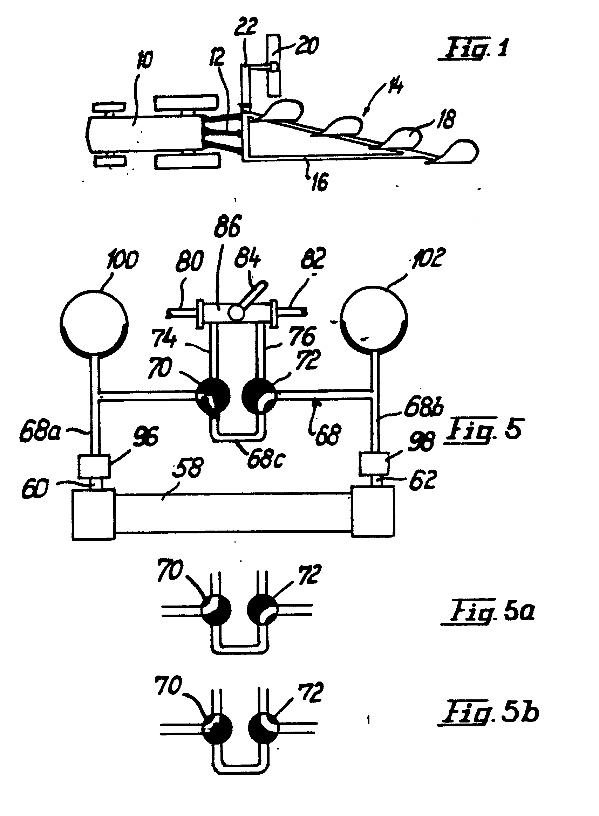

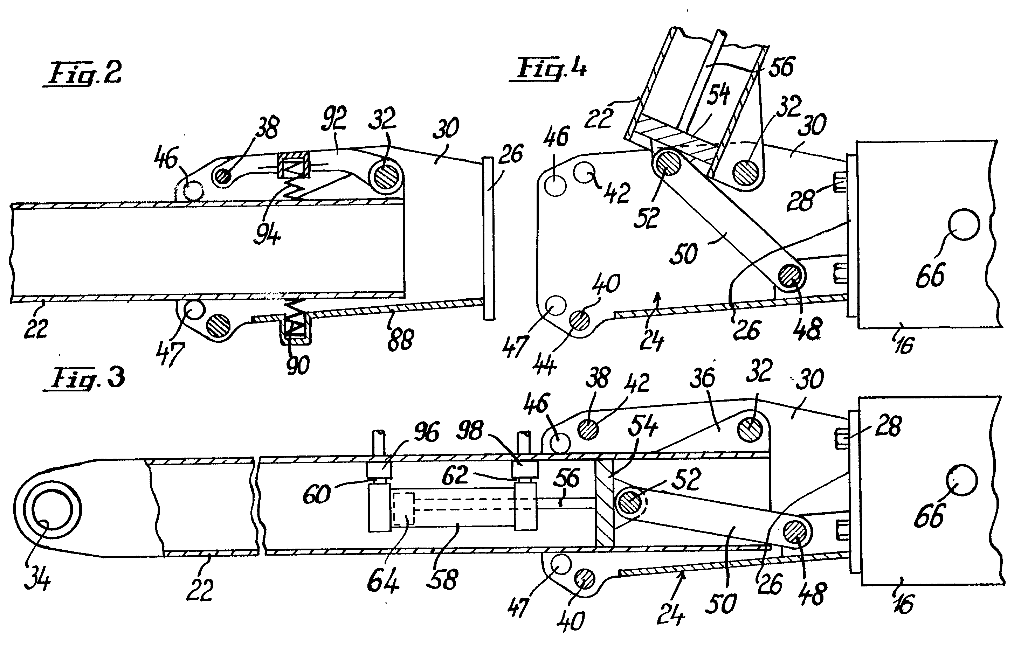

In Fig 1 ist an einem Schlepper 10 in an sich bekannter Weise mittels einer Dreipunktanlenkung 12 ein Anbaubeetpflug 14 befestigt, dessen Rahmen 16 vier Pflugschare 18 trägt. Mit dem vorderen Ende des Pflugrahmens 16 ist ein Ausleger 22 verbunden, der quer zur Fahrtrichtung seitlich über den Arbeitsbereich des Pfluges hervorsteht und mit dessen freiem Ende ein zusätzliches Arbeitsgerät 20, z. B. eine Egge, verbunden ist.

Der Ausleger 22 ist mit dem Pflugrahmen 16 mittels eines Befestigungsabschnitts 24 verbunden, der eine Bodenplatte 26 besitzt, die mit dem Pflugrahmen 16 durch Schrauben 28 verbunden ist. An der Bodenplatte 26 sind zwei zueinander parallele, vertikale, quer zur Arbeitsrichtung verlaufende Flansche 30 angebracht, zwischen welche der Ausleger 22 eingreift. Zwischen den beiden Flanschen 30 erstreckt sich in Arbeitsrichtung des Pfluges 14 nahe dem oberen Rand der beiden Flansche 30 ein Lagerbolzen 32 für den Ausleger 22.

Der Ausleger 22 ist als im Querschnitt etwa quadratisches Hohlprofil ausgebildet. An seinen vom Befestigungsabschnitt 24 abgewandten Ende ist der Ausleger mit einer etwa in Arbeitsrichtung verlaufenden Lagerbohrung 34 versehen, die zum Anschluß des zusätzlichen Arbeitsgeräts 20 dient. Das Zusatzgerät 20 wird derart angeordnet, daß es gegenüber dem Ausleger 22 eine Bewegung um die Achse der Bohrung 34 durchführen kann.

An seinem den Befestigungsabschnitt 24 zugewandten Ende sind an der Oberseite des Auslegers 22 zwei Lageraugen 36 angeordnet, welche von dem Lagerbolzen 32 durchquert werden.

Da die zu bearbeitende Bodenoberfläche meist nicht völlig eben ist, kann sich der zur Führung des Zusatzgeräts dienende Ausleger 22 zum Ausgleich von Bodenunebenheiten um den Lagerbolzen 32 in gewissen Grenzen einstellen. In Fig. 3 ist eine mittlere Arbeitsstellung des Auslegers 22 gezeigt, aus welcher nach oben und unten noch eine begrenzte Bewegung möglich ist, die nach oben durch einen Bolzen 38 und nach unten durch einen Bolzen 40 begrenzt wird. Die Bolzen 38 und 40 durchqueren die beiden Flansche 30, wofür miteinander fluchtende Bohrungspaare 42 bzw. 44 in den Flanschen 30 vorgesehen sind. Mittels weiterer Bohrugspaare 46, 47 ist es möglich, den Ausleger ohne Beweglichkeit um die Achse des Lagerbolzens 32 festzulegen, indem die Bolzen 38 und 40 aus den Bohrungspaaren 42 bzw. 44 in die Bohrungspaare 46, 47 überfürt werden.

Nach Entfernung des Bolzens 38 kann der Ausleger 22 um ca. 90° in seine in Fig. 4 gezeigte Ruhestellung überführt werden.

Außerhalb des Auslegers 22 ist zwischen den Flanschen 30 ein zum Lagerbolzen 32 paralleler Stützbolzen 48 nahe dem unteren Rand der Flansche 30 angeordnet, an welchem verschwenkbar eine Schwinge 50 mit ihrem einen Ende gelagert ist, deren anderes Ende um eine zum Stützbolzen 48 parallele Achse 52 beweglich mit einem Schieber 54 verbunden ist, der dem Querschnitt des Auslegers 22 eingepaßt und in dessen Längsrichtung verschieblich ist. Der Schieber 54 ist mit dem freien Ende der Kolbenstange 56 eines doppeltwirkenden Hydraulikzylinders 58 verbunden, der ortsfest im Ausleger 22 geordnet ist.

Der Hydraulikzylinder 58 ist mit zwei Anschlüssen 60 und 62 versehene. Im Inneren des Hydraulikzylinders 58 ist verschieblich ein mit der Kolbenstange 56 verbundener Kolben 64 angeordnet, der bei Druckbeaufschlagung über den Anschluß 60 in Fig. 3 nach links und über den Anschluß 62 in Fig. 3 nach rechts bewegbar ist. Die Einzelheiten der hydraulischen Anordnung ergeben sich aus Fig. 5.

Die erfindungsgemäße Konstruktion eignet sich sowohl für die Beetpflüge als auch für Drehpflüge, weshalb in den Fig. 3 und 4 zum besseren Verständnis im Bereich des Pflugrahmens 16 schematisch eine Pflugdrehachse 66 eingezeichnet ist.

Die Fig. 5 zeigt das hydraulische System zur Betätigung des Auslegers 22 nur schematisch; andere Ventilanordnungen, welche geeignet sind, die gleichen Verbindungen zu erzeugen sollen dadurch nicht ausgeschlossen sein.

Wie aus Fig. 5 ersichtlich ist, sind die Anschlüsse 60 und 62 des Hydraulikzylinders 58 durch eine Leitung 68 miteinander verbunden, in welche zwei Dreiwegeventile 70 und 72 in Reihe eingeschaltet sind. Der zwischen dem Anschluß 60 und dem Dreiwegeventil 70 befindliche Abschnitt der Leitung 68 wird genauer mit 68a, der Leitungsabschnitt zwischen dem Anschluß 62 und dem Dreiwegeventil 72 wird als 68b und der Leitungsabschnitt zwischen den beiden Dreiwegeventilen 70 und 72 als 68c bezeichnet.

Über die Dreiwegeventile 70 und 72 sind Versorgungsleitungen 74 und 76 mit der Leitung 68 verbunden, welche dazu dienen, die Verbindung mit einer Quelle eines unter Druck stehenden Strömungsmittels am Schlepper 10 bzw. mit einer am Schlepper angeordneten Rücklaufleitung herzustellen. In Fig. 5 ist die Druckleitung mit 80, die Rücklaufleitung mit 82 bezeichnet. Ein mittels eines Umstellhebels 84 betätigbares Umstellventil 86 dient dazu, wahlweise die Versorgungsleitung 74 mit der Druckleitung 80 und die Versorgungsleitung 76 mit der Rücklaufleitung 82 oder aber die Versorgungsleitung 74 mit der Rücklaufleitung 82 und die Versorgungsleitung 76 mit der Druckleitung 80 zu verbinden. In einer neutralen Mittelstellung sind Druckleitung 80 und Rücklaufleitung 82 abgesperrt. Es handelt sich bei dem Umstellventil 86 um die bei Schleppern üblicherweise vorhandene Regeleinheit.

Eine vereinfachte Ausführungsform eines Auslegers 22 ist in Fig. 2 dargestellt. Es fehlt dort der Hydraulikzylinder 58, statt dessen ist in einer Bodenplatte 88 des Befestigungsabschnitts 24 eine als Dämpfungsglied dienende Druckfeder 90 angeordnet, welche geeignet ist, auf die Unterseite des Auslegers 22 einzuwirken, um diesen in seine mittlere Arbeitsposition zurückzudrücken, sowie in einem um den Lagerbolzen 32 verschwenkbaren, in seiner Betriebsstellung mittels einer dem Bohrungspaar 42 zugeordneten Bohrung durch den Bolzen 38 festlegbaren Lagerbügel 92 eine Druckfeder 94, welche geeignet ist, durch Druck auf die Oberseite des Auslegers 22 diesen in seine mittlere Arbeitsposition zu bewegen.

Soll der in Fig. 2 gezeigte Ausleger 22 in seine der Fig. 4 entsprechende Ruhestellung überführt werden, so wird zunächst der Bolzen 38 entfernt und der Lagerbügel 92 zurückgeklappt, worauf dann der Ausleger 22 ungehindert nach oben geschwenkt werden kann.

Falls die Anordnung gemäß Fig. 2 an einem Drehpflug angebracht ist, verhindert die Wirkung der Federn 90 und 94 ein plötzliches Umschlagen des Auslegers 22, wenn sich die Bolzen 38 und 40 in den Bohrungspaaren 42 bzw. 44 befinden und dem Ausleger 22 eine begrenzte Schwenkmöglichkeit bieten.

Die Wirkung der Federn 90 und 94 wird bei der hydraulisch betätigbaren Ausführungsform von einstellbaren Drosselventilen 96 und 98 übernommen, welche im Bereich der Anschlüsse 60 bzw. 62 angeordnet sind. Bei der in Fig. 5 gezeigten Stellung der Dreiwegeventile 70 und 72 sind die Anschlüsse 60 und 62 direkt miteinander verbunden. Bei einer Bewegung des Kolbens 64 wird das Druckmittel beim Überströmen von einer Kolbenseite zur anderen Kolbenseite durch die Drosselventile 96 und 98 verzögert, wodurch sich die gewünschte Dämpfungswirkung ergibt. Beim Bruch einer Hydraulikleitung bei in Ruhestellung gemäß Fig. 4 befindlichem Ausleger 22 wird das Ausströmen des Druckmittels ebenfalls durch die Drosselventile 96 oder 98 verzögert, so daß der Ausleger 22 nicht plötzlich nach unten stürzen kann. Dies dient der Sicherheit.

Zwischen dem Dreiwegeventil 70 und dem Anschluß 60 kann im Leitungsabschnitt 68a ein Druckspeicher 100, und im Leitungsabschnitt 68b zwischen dem Dreiwegeventil 72 und dem Anschluß 62 ein Druckspeicher 102 angeordnet sein. Die Druckspeicher können beispielsweise mit einem Gasdruck von 50 Bar vorgespannt sein.

Will man den Ausleger 22 und damit das daran befestigte Zusatzgerät gegen den Boden drücken, wird die in Fig. 5a gezeigte Ventilstellung gewählt, in welcher ein Anschluß, hier der Anschluß 60, mit der Druckleitung 80 verbunden ist, während der andere Anschluß, hier 62, gesperrt ist. Es kann nun der Druck in dem Leitungsabschnitt 68a erhöht werden, bis der Druck von 50 Bar erreicht ist, wobei der Kolben 64 diesen Druck auf den Leitungsabschnitt 68b überträgt und somit auch den Druckspeicher 102 entsprechend spannt, so daß bei einem Betrieb in Verbindung mit einem Drehpflug in beiden Fahrtrichtungen eine entsprechende Vorspannung zur Verfügung steht. Gegebenenfalls kann auch einer der Druckspeicher entfallen. Sobald der gewünschte Druck erreicht ist, wird die Verbindung mit der Druckleitung 80 geschlossen, entweder durch Umstellung des Dreiwegeventils 70 in seine nicht gezeigte Sperrstellung oder durch Betätigung des Umstellventils 86.

Soll der Ausleger 22 aus der Arbeitsstellung gemäß Fig. 3 in die Ruhestellung gemäß Fig. 4 überführt werden, wird der Bolzen 38 entfernt und dann die in Fig. 5b gezeigte Ventilstellung eingestellt, so daß die vom Pflug abgewandte Seite des Kolbens 64 aus der Druckleitung 80 beaufschlagt werden kann, während die andere Kolbenseite mit der Rücklaufleitung 82 verbunden ist. Beim Absenken des Auslegers 22 wird das Umstellventil 86 umgestellt, um die andere Kolbenseite mit Druck zu beaufschlagen.

## Patentansprüche

1. Pflug (14) mit einem am Pflugrahmen (16) angebrachten, in Arbeitsstellung seitlich quer zur Fahrtrichtung aus dem Arbeitsbereich des Pfluges (14) herausragenden Auslege (22) für den Anschluß von Zusatzgeräten (20), wobei der Ausleger (22) gegenüber einem mit dem Pflugrahmen (16) verbindbaren Befestigungsabschnitt (24) um eine dem Pflugrahmen (16) benachbart angeordnete, etwa parallel zur Fahrtrichtung verlaufende Schwenkachse (32) verschwenkbar ist und in einer Arbeitsstellung gegenüber dem Befestigungsabschnitt (24) festlegbar ist, dadurch gekennzeichnet, daß die Beweglichkeit des Auslegers (22) um die Schwenkachse (32) in Bezug auf eine mittlere, etwa horizontale Arbeitsposition durch zwei Anschläge (38, 40) begrenzbar ist, die zwischen einer den Ausleger (22) in seiner mittleren Arbeitsposition gegenüber dem Befestigungsabschnitt (24) festlegenden Position und einer seinen Ausschlag nach beiden Schwenkrichtungen auf einen geringen, zum Ausgleich von Bodenunebenheiten geeigneten Winkel begrenzenden Position verstellbar sind, und daß zumindest auf der oberen Seite des Auslegers (22) der Anschlag (38) entfernbar ist.

2. Pflug nach Anspruch 1, dadurch gekennzeichnet, daß der Ausleger (22) durch gegenläufig wirksame Dämpfungselemente (58, 96, 98: 90, 94) in seine mittlere Arbeitsposition vorgespannt ist.

3. Pflug nach Anspruch 2, dadurch gekennzeichnet, daß durch Strömungsmitteldruck wirksame Dämpfungselemente (58, 96, 98) vorgesehen sind.

4. Pflug nach Anspruch 3, dadurch gekennzeichnet, daß am Ausleger (22) ein in dessen Längsrichtung wirkender, doppeltwirkender Hydraulikzylinder (58) angeordnet ist, dessen Kolbenstange (56) in Längsrichtung des Auslegers (22) geführt und unter Bildung eines Kniegelenks mit parallel zur Schwenkachse (32) verlaufender Gelenkachse (52) mit einer am Befestigungsabschnitt (24) um eine parallel zur Schwenkachse (32) verlaufenden Stützachse (48) verschwenkbaren Schwinge (50) verbunden ist, und daß Schwenkachse (32) und Stützachse (48) auf unterschiedlichen Seiten der Kolbenstangenachse liegen.

5. Pflug nach Anspruch 4, dadurch gekennzeichnet, daß die Anschlüsse des Hydraulikzylinders (58) mit einstellbaren Drosselventilen (96, 98) versehen sind.

6. Pflug nach einem der Ansprüche 4 oder 5, dadurch gekennzeichnet, daß die beiden Anschlüsse (60, 62) des Hydraulikzylinders (58) über die Drosselventile (96, 98) direkt miteinander verbindbar sind.

7. Pflug nach einem der Ansprüche 4 bis 6, dadurch gekennzeichnet, daß jedem Anschluß (60, 62) ein Druckspeicher (100, 102) zugeordnet ist.

8. Pflug nach Anspruch 7, dadurch gekennzeichnet, daß jeder Anschluß (60, 62) und der ihm zugeordnete Druckspeicher (100, 102) wahlweise mit einer über die Regeleinheit (86) an einem Zugfahrzeug (10) mit einer Druckquelle (80) oder Rücklaufleitung (82) verbindbaren Versorgungsleitung (74, 76) oder dem jeweils anderen Anschluß (62, 60) und dem ihm zugeordneten Druckspeicher (102, 100) verbindbar ist.

9. Pflug nach einem der vorhergehenden Ansprüche, dadurch gekennzeichnet, daß der Ausleger (22) als Hohlprofil ausgebildet ist und in seinem Inneren gegebenenfalls den Hydraulikzylinder (58) und die Druckspeicher (100, 102) aufnimmt.

## Claims

1. A plough (14 having a plough frame (16) with an implement mount (22) wich in working position projects above the working range of the plough (14) in a lateral direction crossing the direction of motion of the plough, said implement mount (22) being pivotable relatively to a mounting portion (24), attachable to the plough frame (16), around a pivot axis (32) arranged adjacent to the plough frame and approximately parallel with said direction of motion, said implement mount (22) being further lockable with respect to the mounting portion (24) in a working position, characterized in that the movability of the implement mount (22) around said pivot axis (32) and with respect to an approximately horizontal intermediate position is restricted by means of two stops (38, 40) adjustable between a position in which the implement mount (22) is fixed with respect to the mounting portion (24) in said intermediate position and a position in which the movability of the impelent mount in both directions is restricted to a small angle allowing the compensation of the unevenness of the ground surface, at least the stop (38) cooperating with the upper side of the implement mount (22) being removable.

2. A plough according to claim 1 characterized in that the implement mount (22) is biased into its intermediate position by means of damping elements (58, 96, 98; 90, 94) working in opposite directions.

3. A plough according to claim 2 characterized in that it is provided with fluid pressure operated damping elements (58, 96, 98).

4. A plough according to claim 3 characterized in that a double acting hydraulic cylinder (58) is attached to the implement mount (22) so as to work in the sense of length of said implement mount, the piston rod (56) of the hydraulic cylinder being guided in the sense of length of said implement mount (22) and coupled with an arm (50) mounted pivotable around a supporting axis (48) on said mounting portion (24) thus forming a toggle joint, the axis of which is parallel with said pivot axis (32), and that said pivot axis (32) and said supporting axis (48) are situated at different sides of the axis of the piston rod (56).

5. A plough according to claim 4 characterized in that the fluid connections of the hydraulic cylinder (58) are provided with adjustable throttle valves (96, 98).

6. A plough according to one of claims 4 or 5 characterized in that both fluid connections (60, 62) of the hydraulic cylinder (58) are directly connectable via said throttle valves (96, 98).

7. A plough according to any one of claims 4 to 6 characterized in that each fluid connection (60, 62) is associated with a pressure accumulator (100, 102).

8. A plough according to claim 7 characterized in that each fluid connection (60, 62) and its associated pressure accumulator (100, 102) are alternatively connectable with a supply pipe (74, 76), which is connectable with a source of pressure (80) or a return pipe (82) via a control unit (86) arranged on a traction vehicle (10), or the respective other fluid connection (62, 60) and its associated pressure accumulator (102, 100).

9. A plough according to any one of the preceding claims characterized in that the implement mount (22) is a structure of hollow section within which the hydraulic cylinder (58) and the pressure accumulators are arranged if the implement mount is provided with such elements.

**Revendications**

1. Charrue (14) avec un bras (22) rapporté sur le châssis de la charrue (16), dépassant, en position de travail, de la zone de travail de la charrue (14), sur le côté et perpendiculairement à la direction de déplacement et prévu pour le raccordement d'un outil d'appoint (20), le bras (22) étant monté pivotant, par rapport à une pièce de raccordement (24) reliable au châssis de la charrue (16), autour d'un axe de rotation disposé au voisinage du châssis de charrue (16), sensiblement parallèle à la direction de déplacement, et pouvant être maintenue fermement en position de travail par rapport à la pièce de raccordement (24), caractérisé en ce que la mobilité du bras (22) autour de l'axe de rotation (32) peut être limité au moyen de deux butées (38, 40) par rapport à une position de travail moyenne sensiblement horizontale, butées qui sont réglables entre une position maintenant le bras (22) dans sa position de travail moyenne, contre la pièce de raccordement (24), et une position limitant son débattement dans les deux sens à un angle de faible amplitude adapté pour rattraper les inégalités du sol, et en ce qu'au moins la butée (38) situé du côté supérieur du bras (22) peut être enlevée.

2. Charrue suivant la revendication 1 caractérisée en ce que le bras (22) est précontraint dans sa position de travail moyenne au moyen d'éléments amortisseurs agissant en sens contraire (58, 96, 98, 90, 94).

3. Charrue suivant la revendication 2 caractérisée en ce qu'elle comprend des éléments amortisseur (58, 96, 98) actionnés par une pression moyenne de fluide.

4. Charrue suivant la revendication 3 caractérisée en ce que sur le bras (22) est fixé un vérin hydraulique à double effet (58), agissant dans le sens de la longueur du bras, vérin dont la tige de piston (56) est guidée dans le sens de la longueur du bras (22) et est reliée, en formant une genouillère, avec un axe d'articulation (52) parallèle à l'axe de rotation (32), à la pièce de raccordement (24), au moyen d'une bielle oscillant autour d'un axe de maintien (48) disposé parallèlement à l'axe de rotation (32) et en ce que l'axe de rotation (32) et l'axe de maintien (48) se trouvent sur des côtés différents de l'axe de la tige de piston.

5. Charrue suivant la revendication 4 caractérisée en ce que les raccords du vérin hydraulique (58) sont prévus avec des soupages de laminage (96, 98) réglables.

6. Charrue suivant l'une quelconque des revendications 4 ou 5 caractérisée en ce que les deux raccords (60, 62) du vérin hydraulique (58) peuvent être reliés directement l'un à l'autre par l'intermédiaire des soupages réglables (96, 98).

7. Charrue suivant l'une quelconque des revendications 4 à 6, caractérisée en ce qu'à chaque raccord (60, 62) est associé un réservoir sous pression (100, 102).

8. Charrue suivant la revendication 7 caractérisée en ce que chaque raccord (60, 62) et le réservoir sous pression (100, 102) qui lui est associé, peut être reliés, au choix avec une canalisation d'alimentation (74, 76) reliée elle-même par l'intermédiaire d'une unité de régulation (86) sur le véhicule tracteur (10), avec une source de pression (80) ou une canalisation de retour (82), ou bien il peut être relié à l'autre raccord (62, 60) et au réservoir de pression (102, 100) qui est associé à ce dernier.

9. Charrue suivant l'une quelconque des revendications précédentes, caractérisée en ce que le bras (22) est formé à partir d'un profil creux et reçoit éventuellement à l'intérieur le vérin hydraulique (58) et le réservoir sous pression (100, 102).

0 088 140

**Fig. 1**

**Fig. 5**

**Fig. 5a**

**Fig. 5b**

Fig.2

Fig.3

Fig.4